(19) Europäisches Patentamt
European Patent Office
Office européen des brevets

(11) **EP 3 352 354 B1**

(12) **EUROPEAN PATENT SPECIFICATION**

(45) Date of publication and mention of the grant of the patent:
**18.12.2019 Bulletin 2019/51**

(51) Int Cl.:
*H02M 1/15* *(2006.01)*     *H02M 1/32* *(2007.01)*
*H02M 1/00* *(2006.01)*     *H02M 7/483* *(2007.01)*

(21) Application number: **17152316.0**

(22) Date of filing: **19.01.2017**

(54) **A VOLTAGE SOURCE CONVERTER**

**SPANNUNGSQUELLENWANDLER**

**CONVERTISSEUR DE SOURCE DE TENSION**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.07.2018 Bulletin 2018/30**

(73) Proprietor: **General Electric Technology GmbH**
**5400 Baden (CH)**

(72) Inventors:
• **TARDELLI, Francesco**
**Nottingham, NG1 1AR (GB)**
• **COSTABEBER, Alessandro**
**Nottingham, NG2 2LE (GB)**
• **FELDMAN, Ralph**
**Nottingham, NG8 1HT (GB)**

(74) Representative: **Openshaw & Co.**
**8 Castle Street**
**Farnham, Surrey GU9 7HR (GB)**

(56) References cited:
**EP-A1- 2 858 231**     **EP-A1- 3 096 446**
**WO-A1-2011/141059**

• **AMANKWAH EMMANUEL ET AL: "The Series Bridge Converter (SBC): A hybrid modular multilevel converter for HVDC applications", 2016 18TH EUROPEAN CONFERENCE ON POWER ELECTRONICS AND APPLICATIONS (EPE'16 ECCE EUROPE), JOINTLY OWNED BY IEEE-PELS AND EPE ASSOCIATION, 5 September 2016 (2016-09-05), pages 1-9, XP032985078, DOI: 10.1109/EPE.2016.7695361 [retrieved on 2016-10-25]**

EP 3 352 354 B1

**Description**

This invention relates to voltage source converter for use in high voltage direct current (HVDC) power transmission and reactive power compensation. In high voltage direct current (HVDC) power transmission networks alternating current (AC) power is typically converted to direct current (DC) power for transmission via overhead lines and/or undersea cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance. The conversion between DC power and AC power is utilized in power transmission networks where it is necessary to interconnect the DC and AC electrical networks. In any such power transmission network, converters are required at each interface between AC and DC power to effect the required conversion; AC to DC or DC to AC. EP 3096446 A1 discloses a method of controlling a converter. EP 2858231 A1 discloses a voltage source converter which comprises first and second DC terminals for connection to a DC electrical network. AMANKWAH EMMANUEL ET AL, "The Series Bridge Converter (SBC): A hybrid modular multilevel converter for HVDC applications", 2016 18TH EUROPEAN CONFERENCE ON POWER ELECTRONICS AND APPLICATIONS (EPE'16 ECCE EUROPE), JOINTLY OWNED BY IEEE-PELS AND EPE ASSOCIATION, (20160905), doi:10.1109/EPE.2016.7695361, pages 1 - 9 discloses a hybrid modular multilevel voltage source converter suitable for HVDC applications. WO 2011/141059 A1 discloses an AC/DC converter.

The invention is defined by the subject-matter of independent claim 1. Further preferred embodiments are defined by the dependent claims. According to an aspect of the invention there is provided a voltage source converter, for use in high voltage direct current power transmission and reactive power compensation, comprising a plurality of converter limbs connected in series between first and second DC terminals connectable in use to a DC network, each converter limb including first and second series connection points between which extends a longitudinal chain-link converter operable to provide a stepped variable voltage, each first series connection point being electrically connected with a corresponding first AC connection terminal via a first transverse branch, each second series connection point being electrically connected with a corresponding second AC connection terminal via a second transverse branch, the first and second AC connection terminals together defining an AC connection connectable in use to a respective phase of an AC network, and at least one transverse branch in each converter limb including a transverse circuit having therein a transverse chain-link converter operable to provide a stepped variable voltage.

The inclusion of a plurality of converter limbs connected in series between first and second DC terminals of a DC network, with each converter limb including a longitudinal chain-link converter between respective first and second connection points thereof, results in the voltage source converter of the invention having a smaller footprint than, e.g. a conventional voltage source converter which includes a plurality of converter limbs that are connected in parallel with one another between first and second DC terminals (with each such converter limb having first and second converter limb portions that are separated by an AC connection and which each includes a respective chain-link converter). More particularly, the voltage source converter of the invention has a smaller footprint than such conventional voltage source converters either because it requires a significantly lower number of chain-link modules which takes up less space or, where a similar number of chain-link modules are needed, e.g. so as to sustain higher current ratings, it permits those chain-link modules to be connected in parallel with one another such that less insulation spacing is needed and so the overall volume of the voltage source converter is reduced.

Meanwhile, the inclusion in each transverse circuit of a transverse chain-link converter obviates the need to include a large DC voltage blocking capacitor in the transverse circuit and so helps to avoid problems associated with the energy stored in such large capacitors which can, during transient and fault conditions, undesirably give rise to large uncontrolled circulation currents within a chain-link converter. Moreover, the need for a large DC blocking capacitor is avoided while still permitting the voltage source converter of the invention to handle fault conditions.

The transverse circuit additionally includes an inductive element. Including an inductive element in a transverse circuit is advantageous because such an inductive element is able to act as a tuning reactance in relation to the corresponding transverse chain-link converter, and so provides for a reduction in the number and size of chain-link modules required in the said corresponding transverse chain-link converter.

Alternatively, the transverse circuit additionally includes a capacitive element.

The inclusion of a capacitive element in a given transverse circuit assists in removing an average DC voltage introduced by the longitudinal chain-link converters that would otherwise appear at the corresponding first and second AC connection terminals.

In the meantime, the combination of transverse chain-link converter and capacitive element helps to reduce the size of the capacitive element required because the transverse chain-link converter is able to emulate an equivalent inductance which, in turn, eliminates the large voltage drop that would otherwise arise across a smaller capacitive element by generating an antiphase voltage.

Furthermore, the absence of a physical inductance avoids the cost and space requirement associated with including such a component.

In a preferred embodiment of the invention at least one transverse circuit additionally includes a capacitive element and an inductive element.

The combination of transverse chain-link converter with each of a capacitive element and an inductive element helps to reduce the size, cost and volume of the passive elements, i.e. the capacitive and inductive elements, while each of those elements is nevertheless able to provide the benefits associated with its inclusion.

Furthermore, the combination of transverse chain-link converter, capacitive element and inductive element can be operated to create a zero, or very close to zero, AC voltage drop across the corresponding transverse circuit when current is flowing therethrough, and so helps the voltage source converter of the invention to function efficiently.

Preferably the voltage source converter further includes a control unit programmed in the event of a depressed voltage in a single phase of an associated AC network to modify operation of the voltage source converter to reduce the AC voltage presented across the first and second AC connection terminals of a compromised converter limb corresponding to the said depressed single phase.

Reducing the AC voltage presented across the first and second AC connection terminals, e.g. to zero, reduces the current flowing through the compromised phase to a nominal (or even zero) value. Such a step, in combination with a reduction in the active and reactive power exchanged with the faulty phase, similarly helps to maintain within nominal limits the current flowing through the longitudinal and transverse chain-link converters of the converter. This prevents damage to the chain-link modules within the chain-link converters and thereby avoids the operation of protection systems which otherwise would isolate the voltage source converter from associated AC and DC networks and interrupt the transfer of power between those networks.

The control unit may be programmed to control the transverse chain-link converter in the or each transverse branch of the corresponding compromised converter limb to produce a stepped variable voltage which reduces the AC voltage component of the stepped variable voltage produced by the longitudinal chain-link converter of the said corresponding compromised converter limb.

The production of such a reducing stepped variable voltage offsets partially, or (as desired) completely, the AC voltage component produced by the longitudinal chain-link converter of the compromised converter limb, and so the AC voltage subsequently presented across the first and second AC connection terminals of the compromised converter limb is similarly reduced.

Optionally the control unit is further programmed to control the transverse chain-link converter in the or each transverse branch of the or each other non-compromised converter limb to produce a stepped variable voltage which cancels out the AC voltage drop across the corresponding capacitive element within the or each said other non-compromised converter limb.

Such a feature helps to maintain a balance of power in the non-compromised converter limbs.

In another preferred embodiment of the invention the control unit is programmed to control the longitudinal chain-link converter in the corresponding compromised converter limb to produce a stepped variable voltage with a reduced DC voltage component.

The production of such a stepped variable voltage allows a partial, or as desired complete, reduction in the AC voltage presented across the first and second AC connection terminals of the corresponding compromised converter limb in order to maintain a balance in the energy transferred between the voltage source converter and the AC network.

In a still further preferred embodiment of the invention the control unit is further programmed to control the longitudinal chain-link converter in the or each other non-compromised converter limb to produce a stepped variable voltage with an increased DC voltage component.

Increasing the DC voltage component in the stepped variable voltage produced by the longitudinal chain-link converter in the or each other, non-compromised, converter limb compensates for the reduction in the DC voltage component of the stepped variable voltage produced by the longitudinal chain-link converter of the compromised converter limb, and thereby helps to allow the exchange active and reactive power with the non-compromised AC phases, via the corresponding non-compromised converter limbs, while also maintaining the net energy in the compromised converter limb.

Preferably the voltage source converter further includes a control unit programmed in the event of differing voltages in multiple compromised phases of an associated AC network to modify operation of the longitudinal chain-link converter in each compromised converter limb corresponding to a compromised phase to produce a stepped variable voltage with an altered DC voltage component commensurate with the differing voltage in the corresponding compromised phase.

Such features reduce partially, or as desired completely, the AC voltage presented across the first and second AC connection terminals of the corresponding compromised converter limb, and hence reduces also the current flowing in each compromised phase.

One or both of the first and second DC terminals may have connected thereto a compensatory chain-link converter operable to provide a stepped variable voltage.

The control unit preferably is additionally programmed to control the or each compensatory chain-link converter to produce a stepped variable voltage equal but opposite to a voltage ripple that would otherwise appear in a DC voltage at the first and second DC terminals as a result of the differing stepped variable voltages produced by the longitudinal chain-link converters.

The foregoing features desirably remove the voltage ripple, e.g. a zero sequence at fundamental frequency, which would otherwise contaminate the DC voltage within an associated DC network to which the voltage source converter of the invention is, in use, connected.

In another preferred embodiment of the invention the control unit is further programmed to control the longitudinal chain-link converters to produce stepped variable voltages including a set of negating voltage components which together are equal but opposite to a voltage ripple that would otherwise appear in a DC voltage at the first and second DC terminals as a result of the differing stepped variable voltages that would otherwise be produced by the longitudinal chain-link converters.

The foregoing features again desirably remove the voltage ripple, e.g. a zero sequence at fundamental frequency, which would otherwise contaminate the DC voltage within an associated DC network to which the voltage source converter of the invention is, in use, connected.

Optionally the control unit is still further programmed to control the transverse chain-link converter in the or each transverse branch of each converter limb to produce stepped variable voltages including a corresponding set of equal but opposite negating voltage components.

Having a control unit so programmed prevents the set of negating voltage components included in the stepped variable voltages produced by the longitudinal chain-link converters from appearing in the corresponding AC voltage presented across the first and second AC connection terminals of each converter limb, and hence prevents these negating voltage components from changing the desired voltage operating point of the associated AC network, while at the same time maintaining a balance in the active power transferred into and out of each converter limb.

Preferably the voltage source converter further includes a control unit programmed in the event of a depressed voltage in an associated DC network to control each longitudinal chain-link converter to produce a stepped variable voltage with an equally reduced DC voltage component.

Such a control unit allows the sum of the reduced DC voltage components to match the said depressed voltage of the associated DC network while remaining balanced with one another.

Optionally the control unit is still further programmed to control the transverse chain-link converter in the or each transverse branch of each converter limb to produce one of:

(i) a stepped variable voltage to augment or supplant the AC voltage component of the stepped variable voltage produced by the longitudinal chain-link converter in the same converter limb; and
(ii) a zero voltage thereacross.

The production of a stepped variable voltage provides a degree of control over the exchange of reactive power between the converter of the invention and an associated AC network to support continued operation of the said AC network.

The production of a zero voltage simplifies the overall control of the voltage source converter since only the longitudinal chain-link converters need to be controlled.

The control unit may be still further programmed to control the transverse chain-link converter in the or each transverse branch of each converter limb to produce one of:

(i) a DC voltage which reduces the voltage drop across the capacitive element within the same transverse branch; and
(ii) a stepped variable voltage to augment the AC voltage component of the stepped variable voltage produced by the longitudinal chain-link converter in the same converter limb.

The production of a DC voltage which reduces the voltage drop across the capacitive element within the same transverse branch permits the handling of a depressed DC voltage without unduly impacting on subsequent operation of the voltage source converter by avoiding a discharge of each capacitive element (and hence avoiding the need subsequently to charge the capacitive elements back up before operation of the voltage source converter can recommence).

The production of a stepped variable voltage provides a degree of control over the exchange of reactive power between the converter of the invention and an associated AC network to support continued operation of the said AC network.

There now follows a brief description of preferred embodiments of the invention, by way of non-limiting examples, with reference being made to the following figures in which:

Figure 1 shows a voltage source converter according to a first embodiment of the invention;

Figure 2(a) shows a full bridge chain-link module which is included in the voltage source converter shown in Figure 1;

Figure 2(b) shows a half-bridge chain-link module which is included in the voltage source converter shown in Figure 1;

Figure 3(a) illustrates one way of controlling the voltage source converter shown in Figure 1 in the event of a depressed voltage in a single phase of an associated AC network;

Figure 3(b) illustrates a second way of controlling the voltage source converter shown in Figure 1 in the event of a depressed voltage in a single phase of an associated AC network;

Figure 4(a) illustrates control of longitudinal chain-link converters within the voltage source converter shown in Figure 1 in the event of a depressed voltage in multiple phases of an associated AC network;

Figure 4(b) illustrates negating voltage components that may be added to the control shown in Figure 4(a);

Figure 4(c) shows a compensatory chain-link converter that may be included in a variant of the voltage source converter shown in Figure 1;

Figure 5(a) illustrates one way of controlling the voltage source converter shown in Figure 1 in the event of a depressed voltage in an associated DC network;

Figure 5(b) illustrates a second way of controlling the voltage source converter shown in Figure 1 in the event of a depressed voltage in an associated DC network;

Figure 6 shows a voltage source converter according to a second embodiment of the invention;

Figure 7(a) illustrates one way of controlling the voltage source converter shown in Figure 6 in the event of a depressed voltage in a single phase of an associated AC network;

Figure 7(b) illustrates control of longitudinal and transverse chain-link converters in a compromised converter limb of the voltage source converter shown in Figure 7(a);

Figure 7(c) illustrates control of longitudinal and transverse chain-link converters in a non-compromised converter limb of the voltage source converter shown in Figure 7(a);

Figure 8 illustrates a second way of controlling the voltage source converter shown in Figure 6 in the event of a depressed voltage in a single phase of an associated AC network;

Figure 9(a) illustrates one way of controlling the voltage source converter shown in Figure 6 in the event of a depressed voltage in an associated DC network;

Figure 9(b) illustrates a second way of controlling the voltage source converter shown in Figure 6 in the event of a depressed voltage in an associated DC network;

Figure 10 shows a voltage source converter according to a third embodiment of the invention;

Figure 11 shows a voltage source converter according to a fourth embodiment of the invention; and

Figure 12 illustrates various voltage and current levels arising during operation of the voltage source converter shown in Figure 11.

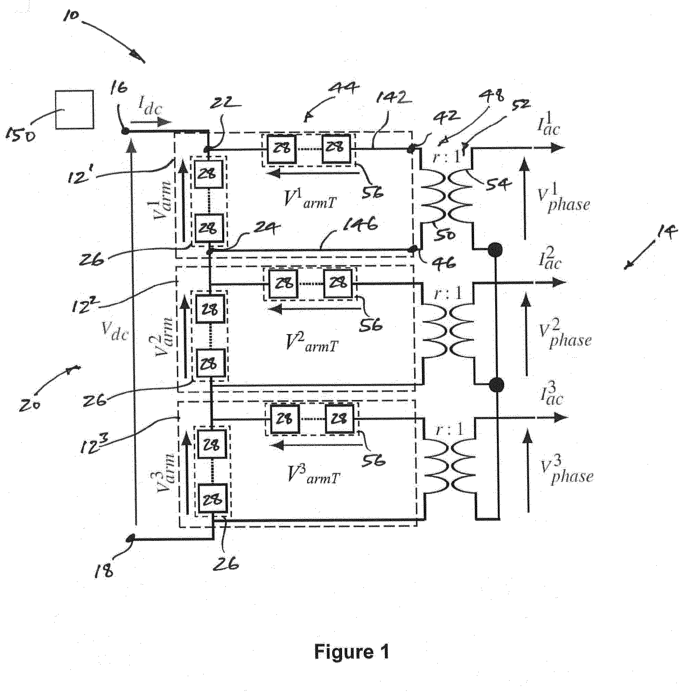

A voltage source converter according to a first embodiment of the invention is designated generally by reference numeral 10, as shown in Figure 1.

The first voltage source converter 10 includes three converter limbs $12^1$, $12^2$, $12^3$ each of which corresponds to a respective phase of an AC network 14 with which the first voltage source converter 10 is, in use, connected. The converter limbs $12^1$, $12^2$, $12^3$ are connected in series between first and second DC terminals 16, 18 which are, in use, connected with a DC network 20.

In other embodiments (not shown) the voltage source converter of the invention may include only two converter limbs or it may include more than three converter limbs, depending on the number of phases in an associated AC network.

Returning to the embodiment shown, each converter limb $12^1$, $12^2$, $12^3$ includes first and second series connection points 22, 24 between which extends a longitudinal chain-link converter 26.

Each longitudinal chain-link converter 26 includes an electrically connected chain of chain-link modules 28, and each chain-link module 28 itself includes a number of switching elements 30 that are connected in parallel with an energy storage device in the form of a capacitor 32. In the embodiment shown each switching element 30 includes a semiconductor device in the form of, e.g. an Insulated Gate Bipolar Transistor (IGBT), which is connected in parallel with an anti-parallel diode. It is, however, possible to use other semiconductor devices in each switching element 30.

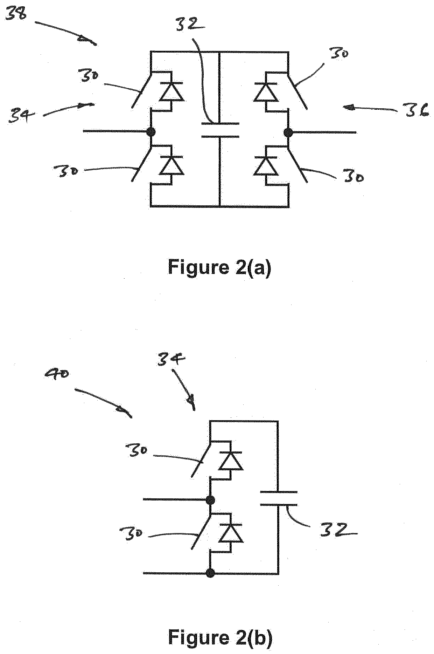

Figure 2(a) shows a first type of chain-link module 28 in which first and second pairs 34, 36 of switching elements 30 and a capacitor 32 are connected in a known full bridge arrangement to define a 4-quadrant bipolar full bridge chain-link module 38. Switching of the switching elements 30 selectively directs current through the capacitor 32 or causes current to bypass the capacitor 32 such that the full bridge module 38 can provide zero, positive or negative voltage and can conduct current in two directions.

Figure 2(b) shows a second type of chain-link sub-module 28 in which only a first pair 34 of switching elements 30 is connected in parallel with a capacitor 32 in a known half-bridge arrangement to define a 2-quadrant unipolar half-bridge chain-link module 40. In a similar manner to the full bridge chain-link sub-module 38, switching of the switching elements 30 again selectively directs current through the capacitor 32 or causes current to bypass the capacitor 32 such that the half-bridge module 40 can provide zero or positive voltage and can conduct current in two directions.

Each longitudinal chain-link converter 26 includes a mixture of full bridge and half-bridge chain-link modules 38, 40. More particularly, half of the chain-link modules 28 in each longitudinal converter 26 are full bridge modules 38. In other embodiments of the invention, however, one or more of the longitudinal chain-link converters may include a different ratio of full bridge and half-bridge modules. In such other embodiments of the invention one or more longitudinal chain-link converters may include only full bridge modules or only half-bridge modules.

In any event, the inclusion of a chain of chain-link modules 28 in each longitudinal chain-link converter 26 means that it is possible to build up a combined voltage across each such longitudinal chain-link converter 26, via the insertion of the capacitors 32 of multiple chain-link modules 28 (with each module 28 providing its own voltage), which is higher than the voltage available from each individual module 28.

Accordingly, each of the chain-link modules 28 work together to permit a given longitudinal chain-link converter 26 to provide a stepped variable voltage source. This in turn allows for the generation of a voltage waveform across the said given longitudinal chain-link converter 26 using a step-wise approximation. In other embodiments of the invention the chain-link modules may be controlled using a pulse width modulation control strategy.

In still further embodiments of the invention (not shown) the aforementioned longitudinal chain-link converter in at least one converter limb may be connected in series with a longitudinal inductor between the corresponding first and second series connection points.

In the meantime, returning to the first voltage source converter 10 shown in Figure 1, the first series correction point 22 of each converter limb $12^1$, $12^2$, $12^3$ is electrically connected with a corresponding first AC connection terminal 42 via a first transverse branch 142 , and the second series connection point 24 of each converter limb $12^1$, $12^2$, $12^3$ is electrically connected via a second transverse branch 146 with a corresponding second AC connection terminal 46. In this manner the first and second AC connection terminals 42, 46 of a given converter limb $12^1$, $12^2$, $12^3$ define a corresponding AC connection 48 which in use is connectable to one of the respective phases of the AC network 14.

More particularly, and by way of example, the AC connection 48 of each converter limb $12^1$, $12^2$, $12^3$ is connected to the secondary winding 50 of a separate and independent single phase transformer 52. Corresponding AC phase voltages $V^1_{phase}$, $V^2_{phase}$, $V^3_{phase}$ and AC phase currents $I^1_{ac}$, $I^2_{ac}$, $I^3_{ac}$ are present across and in a primary winding 54 of each said corresponding single phase transformer 52. The ratio $r$ between the primary and secondary windings 54, 50 is, in the embodiment shown, 1 although this may be different in other embodiments of the invention. Thereafter the single phase transformers 52 are arranged in a star configuration for connection to the AC network 14. In other embodiments of the invention the single phase transformers 52 may instead be arranged in a different configuration, such as a grounded star or delta configuration, for connection to the AC network.

In still further other embodiments of the invention the AC connection 48 of each converter limb $12^1$, $12^2$, $12^3$ may instead be connected to a respective winding of a three phase transformer (not shown) which, in turn, may be arranged in either a star or delta configuration for connection to the AC network.

In the first voltage source converter 10 the first transverse branch 142 in each converter limb $12^1$, $12^2$, $12^3$ includes a first transverse circuit 44 that has therein only a transverse chain-link converter 56 which, like each longitudinal chain-link converter 26, is operable to provide a stepped variable voltage.

Each transverse chain-link converter 56 again includes a mixture of full bridge and half-bridge chain-link modules 38, 40, although in other embodiments one or more transverse chain-link converters 56 include only half-bridge chain-link modules 40or only full bridge modules 38.

In other embodiments of the first voltage source converter (not shown) the second transverse branch may instead include the first transverse circuit, or both the first and second transverse branches may have therein respective first transverse circuits.

In addition to the foregoing the first voltage source converter 10 includes a control unit 150 that is programmed to control operation of the first voltage source converter 10, and more particularly to control the operation of the respective longitudinal and transverse chain-link converters 26, 56. The control unit 150 may be a programmable microcontroller, although other devices may be used.

In use the control unit 150 controls each longitudinal chain-link converter 26 to generate a stepped variable voltage $V^1_{arm}$, $V^2_{arm}$, $V^3_{arm}$ which has a DC component that supports a DC voltage $V_{dc}$ of the DC network 20 and an AC voltage component which supports the AC phase voltage $V^1_{phase}$, $V^2_{phase}$, $V^3_{phase}$ of the corresponding phase of the AC network 14.

More particularly, the sum of the DC voltage component of the stepped variable voltage $V^1_{arm}$, $V^2_{arm}$, $V^3_{arm}$ of the longitudinal chain-link converter 26 in each converter limb $12^1$, $12^2$, $12^3$, is equal to the total voltage $V_{dc}$ of the DC network 20 and this is used to control the DC voltage $V_{dc}$ and to regulate power transfer between the first voltage source converter 10 and the DC network 20.

Meanwhile, each AC phase voltage $V^1_{phase}$, $V^2_{phase}$, $V^3_{phase}$ is derived from the AC component of the stepped variable voltage $V^1_{arm}$, $V^2_{arm}$, $V^3_{arm}$ of the corresponding longitudinal chain-link converter 26 by eliminating a DC offset voltage, i.e. an average DC voltage introduced by the respective longitudinal chain-link converter 26, within the associated stepped variable voltage $V^1_{arm}$, $V^2_{arm}$, $V^3_{arm}$ so that no DC voltage is present at the corresponding AC connection 48.

During normal operation of the first voltage source converter 10 the average DC voltage comonent across each longitudinal chain-link converter 26 is one third of the total DC voltage $V_{dc}$ but the stepped variable voltage $V^1_{arm}$, $V^2_{arm}$, $V^3_{arm}$ across individual longitudinal chain-link converters 26 is modulated in magnitude and phase relative to the AC network 14 in order to regulate the real and reactive power transfer between the first voltage source converter 10 and the AC network 14.

More particularly, during normal operation of the first voltage source converter 10 the DC voltage component of the stepped variable voltage $V^1_{arm}$, $V^2_{arm}$, $V^3_{arm}$ across each longitudinal chain-link converter 26 and the circulating DC current $I^1_{arm}$, $I^2_{arm}$, $I^3_{arm}$ in each converter limb $12^1$, $12^2$, $12^3$ are given by:

$$V^i_{arm} = \frac{V_{dc}}{3} + r \cdot \hat{V}^i_{phase} \sin\left(\omega_{ac} \cdot t - \frac{i-1}{3}\pi\right)$$

and

$$I^i_{arm} = I_{dc} - \frac{1}{r}\hat{I}^i_{phase} \sin\left(\omega_{ac} \cdot t - \varphi - \frac{i-1}{3}\pi\right)$$

with,

$$I_{dc} = \frac{1}{2}m\frac{\hat{I}^i_{phase}}{r}\cos(\varphi)$$

and

$$m = \frac{3 \cdot r \cdot \hat{V}^i_{phase}}{V_{dc}}$$

and where,

$I_{dc}$ is the current flowing in the DC network 20;

$r$ is the ratio between secondary and primary windings of each single phase transformer 52, i.e. is the winding turns (which in the example embodiment shown is 1);

$\omega_{ac}$ is the angular frequency at which the AC network 14 is operating; and

$\varphi$ is the phase shift between respective AC phase voltages $V^1_{phase}$, $V^2_{phase}$, $V^3_{phase}$, and AC phase currents $I^1_{ac}$, $I^2_{ac}$, $I^3_{ac}$ at the primary winding 54 of the corresponding single phase transformer 52.

Meanwhile, DC power and AC power agree with the following power balance equation:

$$V_{dc} \cdot I_{dc} = \frac{3}{2}\hat{V}^i_{phase} \cdot \hat{I}^i_{phase} \cdot \cos(\varphi)$$

Each corresponding transverse chain-link converter 56 blocks the DC offset in the stepped variable voltage $V^1_{arm}$, $V^2_{arm}$, $V^3_{arm}$ of the associated longitudinal chain-link converter 26 by producing a stepped variable voltage $V^1_{armT}$, $V^2_{armT}$, $V^3_{armT}$ according to:

$$V^i_{armT} = \frac{V_{dc}}{3}$$

Accordingly, during such normal operation of the first voltage source converter 10, the AC voltage component of each longitudinal chain-link converter 26 is phase shifted by 120° relative to one another, so that when summed they give zero total AC voltage. Thus a smooth DC voltage $V_{dc}$ is left at the DC terminals 16, 18 of the voltage source converter 10.

In this way independent control of both the AC and DC power flow, both active, i.e. real, and reactive, is maintained.

The control unit 150 is additionally programmed, in the event of a depressed voltage $V1_{phase}$, $V2_{phase}$, $V3_{phase}$ in a single phase of the AC network 14, to modify operation of the first voltage source converter 10 to reduce the AC voltage presented across the first and second AC connection terminals 42, 46 of the compromised converter limb $12^1$, $12^2$, $12^3$ corresponding to the said depressed single phase.

One way in which the control unit 150 may be so additionally programmed is to control the transverse chain-link converter 56 in the first transverse branch 142 of the corresponding compromised converter limb $12^1$, $12^2$, $12^3$ to produce a stepped variable voltage $V1_{armT}$, $V2_{armT}$, $V3_{armT}$ which reduces or completely cancels the AC voltage component of the stepped variable voltage $V1_{arm}$, $V2_{arm}$, $V3_{arm}$ produced by the longitudinal chain-link converter 26 of the corresponding compromised converter limb $12^1$, $12^2$, $12^3$. In the meantime the longitudinal chain-link converters 26 are controlled to maintain unchanged the DC and AC voltage component share of the stepped variable voltage $V1_{arm}$, $V2_{arm}$, $V3_{arm}$ they produced prior to the depressed voltage arising.

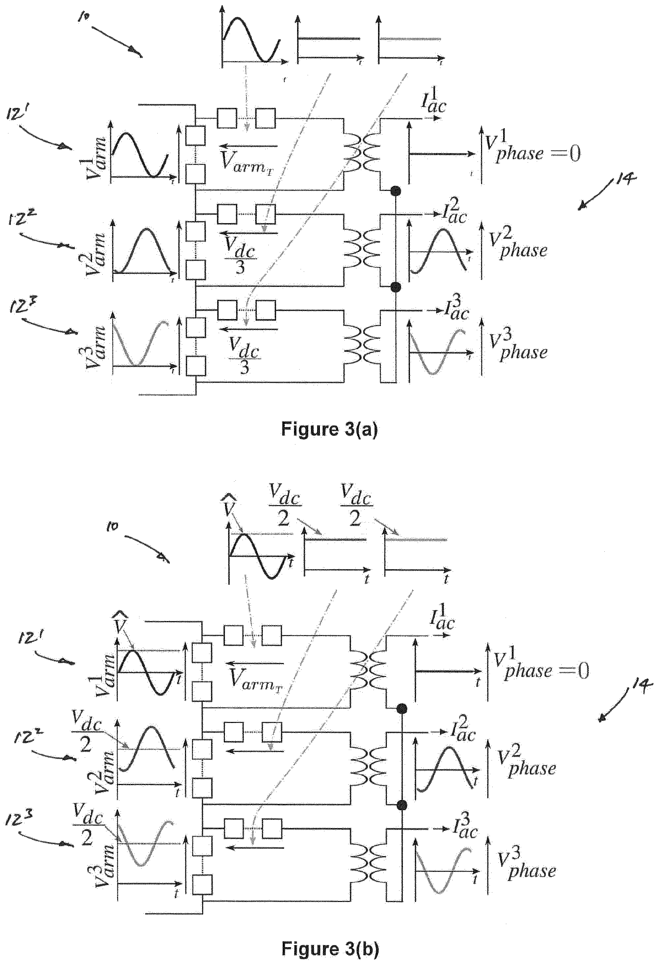

For example as shown in Figure 3(a), in the event of a phase to ground fault in the first phase of the AC network 14 which results in a zero voltage $V1_{phase}$ appearing in the first phase of the AC network 14, the control unit 150 controls the transverse chain-link converter 56 in the first transverse branch 142 of the corresponding compromised first converter limb $12^1$ to produce a stepped variable voltage $V1_{armT}$ which is equal but opposite to the AC voltage component of the stepped variable voltage $V1_{arm}$ produced by the longitudinal chain-link converter 26 of the compromised first converter limb $12^1$, i.e. produce a stepped variable voltage $V1_{armT}$ that has the same amplitude but opposite polarity to the AC voltage component of the stepped variable voltage $V1_{arm}$ produced by the longitudinal chain-link converter 26 of the compromised first converter limb $12^1$. This completely cancels the AC voltage component of the stepped variable voltage $V1_{arm}$ produced by the longitudinal chain-link converter 26 of the compromised first converter limb $12^1$, and so reduces to zero the AC voltage presented across the first and second AC connection terminals 42, 46 of the said first converter limb $12^1$ such that it matches the zero voltage $V1_{phase}$ appearing in the first phase of the AC network 14.

The control of the transverse chain-link converter 56 in the first converter limb $12^1$ in the foregoing manner allows the non-compromised converter limbs, i.e. the second and third converter limbs $12^2$, $12^3$ to continue to exchange reactive power with the corresponding non-compromised phases of the AC network 14. This is due to the fact that if real power is transferred to or from the DC network 20, a DC current flows in the longitudinal chain-link converter 26 of the compromised first converter limb $12^1$ which results in an uncontrolled exchange of energy between the DC network 20 and the longitudinal chain-link converter 26 of the compromised first converter limb $12^1$.

A second way in which the control unit 150 may be so additionally programmed is to control the longitudinal chain-link converter 26 in the corresponding compromised converter limb $12^1$, $12^2$, $12^3$ to produce a stepped variable voltage $V1_{arm}$, $V2_{arm}$, $V3_{arm}$ with a reduced DC voltage component, while at the same time controlling the longitudinal chain-link converter $12^1$, $12^2$, $12^3$ in each other, non-compromised converter limb $12^1$, $12^2$, $12^3$ to produce a stepped variable voltage $V1_{arm}$, $V2_{arm}$, $V3_{arm}$ with an increased DC voltage component. Such control allows the exchange active and reactive power with the non-compromised AC phases, via the corresponding non-compromised converter limbs $12^1$, $12^2$, $12^3$, while also maintaining the net energy in the compromised converter limb $12^1$, $12^2$, $12^3$.

For example as shown in Figure 3(b), again in the event of a phase to ground fault in the first phase of the AC network 14 which results in a zero voltage $V1_{phase}$ appearing in the first phase of the AC network 14, the control unit 150 controls the longitudinal chain-link converter 26 in the compromised first converter limb $12^1$ to produce a stepped variable voltage $V1_{arm}$ with a zero DC voltage component. The control unit 150 also controls the transverse chain-link converter 56 in the same compromised first converter limb $12^1$ to produce stepped variable voltage $V1_{armT}$ which reduces the AC voltage component of the stepped variable voltage $V1_{arm}$ produced by the longitudinal chain-link converter 26 of the compromised first converter limb $12^1$, and indeed completely cancels out the said AC voltage component so as to reduce to zero the AC voltage presented across the first and second AC connection terminals 42, 46 of the said first converter limb $12^1$ such that it matches the zero voltage $V1_{phase}$ appearing in the first phase of the AC network 14.

At the same time the control unit 150 controls the longitudinal chain-link converter 26 in the second and third, non-compromised converter limbs $12^2$, $12^3$ to each produce a stepped variable voltage $V2_{arm}$, $V3_{arm}$ with equally increased DC voltage components. More particularly, the increased DC voltage component produced by each chain-link converter 26 in the non-compromised second and third converter limbs $12^2$, $12^3$ sum together to maintain the pre-fault the DC voltage $V_{dc}$ of the DC network 20. In this manner the non-compromised converter limbs $12^2$, $12^3$ are able to provide for the exchange real power between the DC and AC networks 20, 14 and at the same time the exchange of reactive power with the AC network.

In addition to the foregoing, the control unit 150 is programmed, in the event of differing voltages $V1_{phase}$,

$V^2_{phase}$, $V^3_{phase}$ in multiple compromised phases of the AC network 14, to modify operation of the longitudinal chain-link converter 26 in each compromised converter limb $12^1$, $12^2$, $12^3$ corresponding to a compromised phase to produce a stepped variable voltage $V^1_{arm}$, $V^2_{arm}$, $V^3_{arm}$ with an altered DC voltage component commensurate with the differing voltage in the corresponding compromised phase.

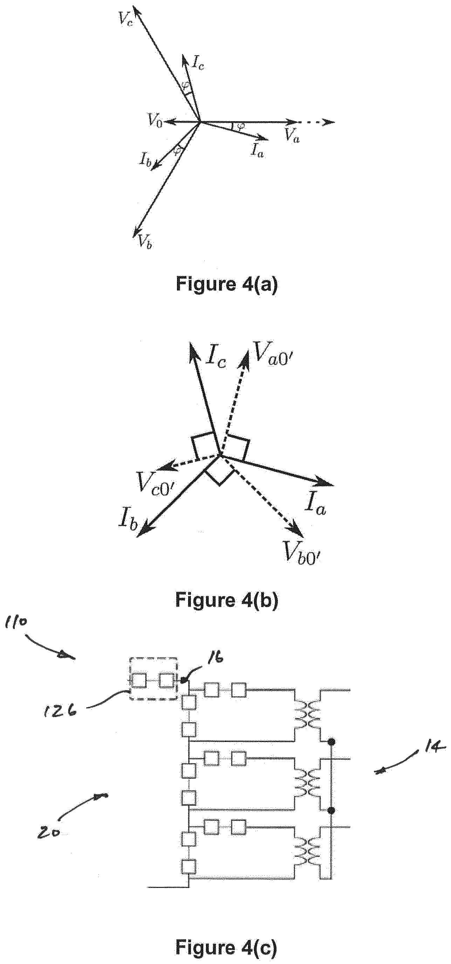

In circumstances when the voltage in each phase is different, this requires the longitudinal chain-link converters 26 to produce stepped variable voltages $V_a$, $V_b$, $V_c$ with a corresponding asymmetric set of AC voltage components, as illustrated schematically by way of example in Figure 4(a). Since the stepped variable voltages $V_a$, $V_b$, $V_c$ differ from one another, i.e. are asymmetric, a zero sequence fundamental frequency $V_o$, i.e. a voltage ripple, appears in the DC voltage $V_{dc}$ at the first and second DC terminals 16, 18, i.e. in the DC voltage $V_{dc}$ of the DC network 20.

In the embodiment shown the control unit 150 is programmed to control the longitudinal chain-link converters 26 to produce stepped variable voltages $V^1_{arm}$, $V^2_{arm}$, $V^3_{arm}$ that include a set of negating voltage components, in the form of leading voltages $V_{aO'}$, $V_{bO'}$, $V_{cO'}$, as shown by way of example in Figure 4(b). The negating voltage components $V_{aO'}$, $V_{bO'}$, $V_{cO'}$ together are equal but opposite to the aforementioned voltage ripple $V_o$, and so cancel out the ripple $V_o$ that would otherwise appear in the DC voltage $V_{dc}$ of the DC network 20.

Each negating voltage component $V_{aO'}$, $V_{bO'}$, $V_{cO'}$ leads the stepped variable voltage $V_a$, $V_b$, $V_c$ that the corresponding longitudinal chain-link converter 26 would otherwise produce by 90° and is added to the stepped variable voltage $V_a$, $V_b$, $V_c$ that ordinarily would be produced. In other embodiments of the invention the negating voltage components may lag the corresponding stepped variable voltage of the longitudinal chain-link converters.

Irrespective of the nature of the negating voltage component $V_{aO'}$, $V_{bO'}$, $V_{cO'}$, in the embodiment shown the control unit 150 is further programmed to control the transverse chain-link converter 56 in each converter limb $12^1$, $12^2$, $12^3$ to produce stepped variable voltages that include a corresponding set of equal but opposite negating voltage components. The addition of such equal but opposite negating voltage components cancels out the impact on the AC voltages $V^1_{phase}$, $V^2_{phase}$, $V^3_{phase}$ in each phase of the AC network 14 of the addition of the negating voltage components $V_{aO'}$, $V_{bO'}$, $V_{cO'}$ to the stepped variable voltages $V^1_{arm}$, $V^2_{arm}$, $V^3_{arm}$ produced by the longitudinal chain-link converters 26.

As an alternative to the inclusion of a control unit programmed to incorporate negating voltage components in the foregoing manner, a variant 110 of the first voltage source converter 10, according to a further embodiment of the invention, may include a first DC terminal 16 which has connected thereto a compensatory chain-link converter 126 that is operable to provide a stepped variable voltage, e.g. as shown in Figure 4(c).

The variant voltage source converter 110 includes a control unit (not shown in Figure 4(c)) that is additionally programmed to control the compensatory chain-link converter 126 to produce a stepped variable voltage equal but opposite to the voltage ripple $V_O$ that would otherwise appear in the DC voltage $V_{dc}$ of the DC network 20.

In still further variants of the first voltage source converter 10 according to other embodiments of the invention, the second DC terminal may instead have a compensatory chain-link converter connected thererto, or both the first and second DC terminals may have a compensatory chain-link converter connected thereto.

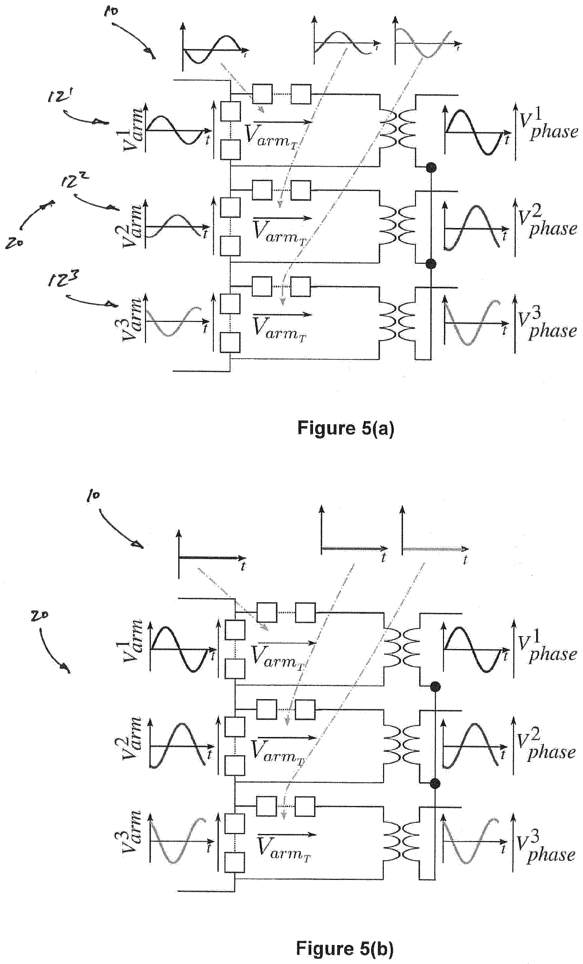

Returning to the first voltage source converter 10 shown in Figure 1, the control unit 150 is additionally programmed, in the event of a depressed voltage in the DC network 20, to control each longitudinal chain-link converter 26 to produce a stepped variable voltage $V^1_{arm}$, $V^2_{arm}$, $V^3_{arm}$ with an equally reduced DC voltage component, as shown by way of example in Figure 5(a). In the illustrated example the DC voltage $V_{dc}$ of the DC network 20 is temporarily depressed to zero, and so the reduced DC voltage components of the stepped variable voltage produced by each longitudinal chain-link converter 26 sum to zero.

In the embodiment shown the control unit 150 is also programmed in such circumstances to control each transverse chain-link converter 56 to produce a stepped variable voltage $V^1_{armT}$, $V^2_{armT}$, $V^3_{armT}$ which augments the AC voltage component of the stepped variable voltage $V^1_{arm}$, $V^2_{arm}$, $V^3_{arm}$ produced by the longitudinal chain-link converter 26 in the same converter limb $12^1$, $12^2$, $12^3$, and thereby permit the transfer of reactive power between the first voltage source converter 10 and the AC network 14. In other embodiments of the invention the control unit 150 may instead control the transverse chain-link converters 56 (in combination with the longitudinal chain-link converters 26) so that only the transverse chain-link converters 56 give rise to an AC voltage across the corresponding first and second AC connection terminals 42, 46, i.e. so that the transverse chain-link converters 56 supplant (i.e. replace completely) the AC voltage component of the stepped variable voltage $V^1_{arm}$, $V^2_{arm}$, $V^3_{arm}$ produced by the corresponding longitudinal chain-link converter 26 in the same converter limb $12^1$, $12^2$, $12^3$.

In still further embodiments of the invention, the control unit 150 may instead be programmed to control each transverse chain-link converter 56 to produce a zero voltage thereacross, as shown by way of example in Figure 5(b) where the DC voltage $V_{dc}$ of the DC network 20 is again temporarily depressed to zero.

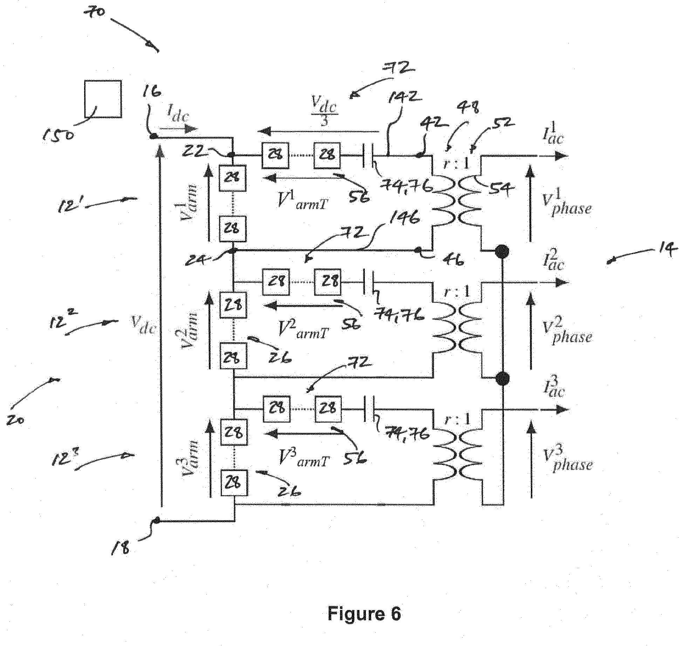

A voltage source converter 70 according to a second embodiment of the invention is shown schematically in Figure 6.

The second voltage source converter 70 is similar to the first voltage source converter 10 and like features share the same reference numerals. The second voltage source converter 70 does, however, differ from the first voltage source converter 10 in that the first transverse branch 142 in each converter limb $12^1$, $12^2$, $12^3$ includes a second

transverse circuit 72 which as well as a transverse chain-link converter 56 additionally includes a capacitive element 74 in the form of a transverse capacitor 76.

In other embodiments (not shown) of the second voltage source converter the second transverse branch may instead include the second transverse circuit, or both the first and second transverse branches may have therein respective second transverse circuits.

The inclusion of such a transverse capacitor 76 in each second transverse circuit 72 additionally helps in removing an average DC voltage, i.e. a DC offset voltage, which is introduced by the longitudinal chain-link converters 26.

More particularly, in use during steady state conditions the DC offset voltage in the second voltage source converter 70 is blocked, i.e. removed, by the corresponding capacitive element 74, i.e. by the corresponding transverse capacitor 76, within each second transverse circuit 72.

Meanwhile each transverse chain-link converter 56 produces a stepped variable voltage $V^1_{armT}$, $V^2_{armT}$, $V^3_{armT}$ with an AC voltage component to cancel out an AC voltage drop across the corresponding transverse capacitor 76 which arises as a result of the current flowing through the said corresponding transverse capacitor 76.

During normal operation of the second voltage source converter 70 the stepped variable voltage $V^1_{armT}$, $V^2_{armT}$, $V^3_{armT}$ produced by the transverse longitudinal chain-link converter 56 in each second transverse circuit 72 is given by:

$$V^i_{armT} = \omega_{ac} \cdot L_{eq} \cdot \frac{1}{r} \hat{I}^i_{phase} \sin\left(\omega_{ac} \cdot t + \frac{\pi}{2} - \varphi - \frac{i-1}{3}\pi\right)$$

where,

$L_{eq}$ is an equivalent inductance emulated by the given transverse chain-link converter 56 according to:

$$L_{eq} = \frac{1}{\omega_{ac}^2 \cdot C_r}$$

with,

$C_r$ being the magnitude of the transverse capacitor 76.

The second voltage source converter 70 similarly includes a control unit 150 which is again programmed, in the event of a depressed voltage $V^1_{phase}$, $V^2_{phase}$, $V^3_{phase}$ in a single phase of the AC network 14, to modify operation of the second voltage source converter 70 to reduce the AC voltage presented across the first and second AC connection terminals 42, 46 of the compromised converter limb $12^1$, $12^2$, $12^3$ corresponding to the said depressed single phase.

One way in which the control unit 150 may be so additionally programmed is again to control the transverse chain-link converter 56 in the corresponding compromised converter limb $12^1$, $12^2$, $12^3$ to produce a stepped variable voltage $V^1_{armT}$, $V^2_{armT}$, $V^3_{armT}$ which reduces the AC voltage component of the stepped variable voltage $V^1_{arm}$, $V^2_{arm}$, $V^3_{arm}$ produced by the longitudinal chain-link converter 26 of the corresponding compromised converter limb $12^1$, $12^2$, $12^3$.

At the same time the control unit 150 of the second voltage source converter 70 is further programmed to control the transverse chain-link converter 56 in each other, non-compromised converter limb $12^1$, $12^2$, $12^3$ to produce a stepped variable voltage $V^1_{armT}$, $V^2_{armT}$, $V^3_{armT}$ which cancels out the AC voltage drop $V^i_{cT}$ across the corresponding transverse capacitor 76 within the or each said other non-compromised converter limb $12^1$, $12^2$, $12^3$.

The longitudinal chain-link converters 26 are at the same time again controlled to maintain unchanged the DC and AC voltage components of the stepped variable voltages $V^1_{arm}$, $V^2_{arm}$, $V^3_{arm}$ they produce.

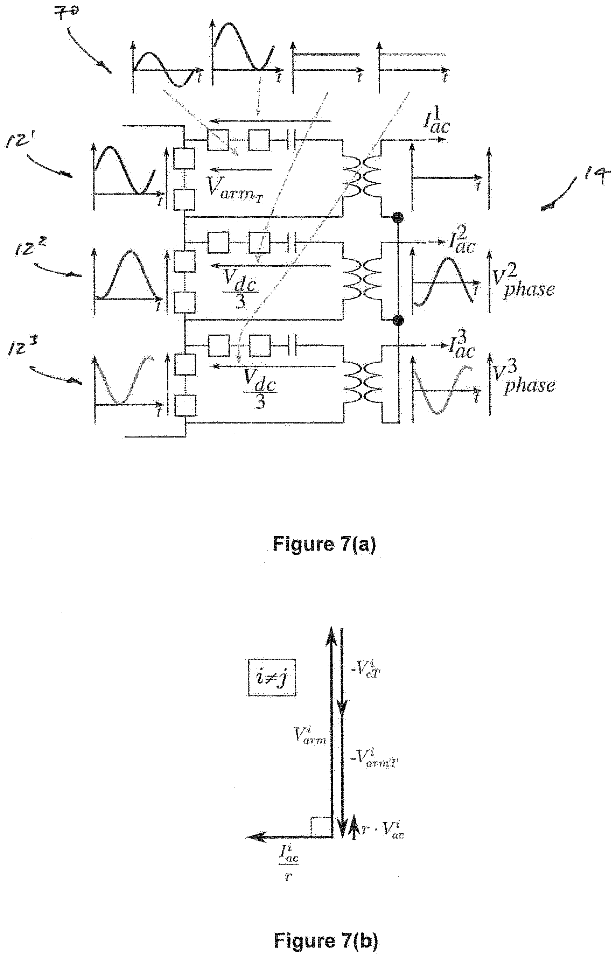

For example as shown in Figure 7(a), in the event of a phase to ground fault in the first phase of the AC network 14 which results in a zero voltage $V^1_{phase}$ appearing in the first phase of the AC network 14, the control unit 150 controls the transverse chain-link converter 56 in the corresponding compromised first converter limb $12^1$ to produce a stepped variable voltage $V^1_{armT}$ which reduces the AC voltage component of the stepped variable voltage $V^1_{arm}$ produced by the longitudinal chain-link converter 26 of the compromised first converter limb $12^1$.

More particularly, as shown in Figure 7(b), the control unit 150 controls the transverse chain-link converter 56 in the compromised first converter limb $12^1$ to produce a stepped variable voltage $V^i_{armT}$ which sums with the voltage drop $V^i_{cT}$ across the transverse capacitor 76 in the first converter limb $12^1$ to be equal but opposite to the AC component of the stepped variable voltage $V^i_{arm}$ produced by the longitudinal chain-link converter 26 of the said first converter limb $12^1$. This has the effect of completely cancelling the AC voltage component of the stepped variable voltage produced by the longitudinal chain-link converter 26 of the compromised first converter limb $12^1$, and so again reduces to zero the AC voltage presented across the first and second AC connection terminals 42, 46 of the said first converter limb $12^1$ such that it matches the zero voltage $V^1_{phase}$ appearing in the first phase of the AC network 14.

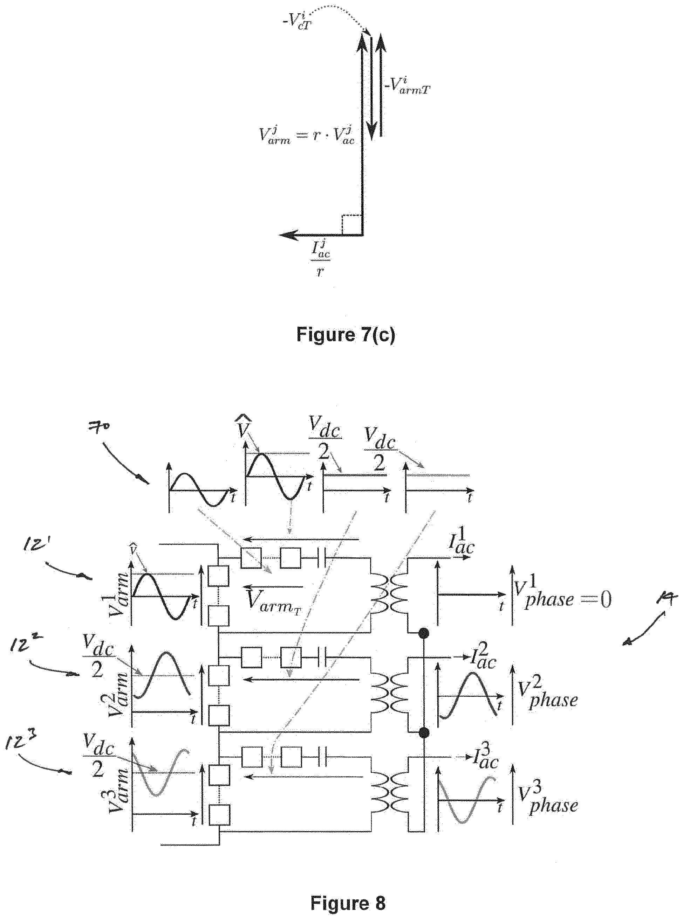

Meanwhile, the phase to ground fault in the first phase of the AC network 14 means that no AC power is transferred via the compromised converter limb $12^1$ and so to maintain a balance of real power in the first converter limb $12^1$ the DC power, i.e. the real power exchanged with the DC network 20, must also be zero. Since the DC power in the compromised converter limb $12^1$ must be zero, then the current $I_{dc}$ flowing in the DC network 20 must also be zero, such that the DC power that can be transferred by each of the non-compromised converter limbs $12^2$, $12^3$ is similarly zero. Accordingly, to maintain a balance of power in the non-compromised converter limbs $12^2$, $12^3$ the AC power transferred via each must also be zero, and so the transverse chain-link converter 56 in each non-compromised converter limb $12^2$, $12^3$ is controlled to produce a stepped variable voltage $V^i_{armT}$ which is equal but opposite to the AC voltage drop $V^i_{cT}$ across the corresponding transverse capacitor 76 and thereby cancels out the said AC voltage drop $V^i_{cT}$ across the corresponding transverse capacitor 76, i.e. as shown in Figure 7(c).

Nevertheless it remains possible, via control of the longitudinal and transverse chain-link converters 26, 56 to transfer reactive power between the converter limbs $12^1$, $12^2$, $12^3$ and the AC network 14.

A second way in which the control unit 150 may be so additionally programmed is the same as with respect to the first voltage source converter 10, i.e. to again control the longitudinal chain-link converter 26 in the corresponding compromised converter limb $12^1$, $12^2$, $12^3$ to produce a stepped variable voltage $V^1_{arm}$, $V^2_{arm}$, $V^3_{arm}$ with a reduced DC voltage component, while at the same time controlling the longitudinal chain-link converter $12^1$, $12^2$, $12^3$ in each other, non-compromised converter limb $12^1$, $12^2$, $12^3$ to produce a stepped variable voltage $V^1_{arm}$, $V^2_{arm}$, $V^3_{arm}$ with an increased DC voltage component, as shown by way of example in Figure 8.

Thanks to this feature it remains possible to exchange active and reactive power with the AC network 14.

In addition to the foregoing, the control unit 150 of the second voltage source converter 70 is programmed in the same manner as the control unit 150 of the first voltage source converter 10 to control the second voltage source converter 70, in the event of differing voltages $V^1_{phase}$, $V^2_{phase}$, $V^3_{phase}$ in multiple compromised phases of the AC network 14.

Again, as an alternative to the inclusion of a control unit programmed to incorporate negating voltage components, a variant (not shown) of the second voltage source converter 70, according to further embodiments of the invention, may have a first DC terminal and/or a second DC terminal which has connected thereto a compensatory chain-link converter that is operable to provide a stepped variable voltage. In such further embodiments the control unit is again additionally programmed to control theor each compensatory chain-link converter to produce a stepped variable voltage equal but opposite to the voltage ripple that would otherwise appear in the DC voltage of the associated DC network.

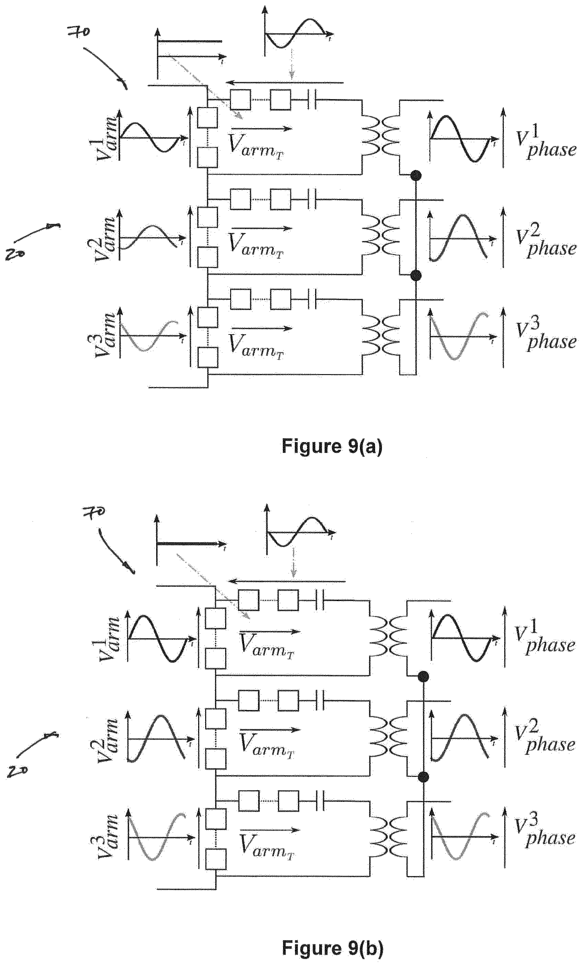

Meanwhile, in the event of a depressed voltage in the DC network 20, the control unit 150 within the second voltage source converter 70 is again additionally programmed to control each longitudinal chain-link converter 26 to produce a stepped variable voltage $V^1_{arm}$, $V^2_{arm}$, $V^3_{arm}$ with an equally reduced DC voltage component, as shown by way of example in Figure 9(a). In the illustrated example the DC voltage $V_{dc}$ of the DC network 20 is again temporarily depressed to zero, and so the reduced DC voltage components of the stepped variable voltage $V^1_{arm}$, $V^2_{arm}$, $V^3_{arm}$ produced by each longitudinal chain-link converter 26 sum to zero.

In the embodiment shown the control unit 150 is also programmed in such circumstances to control each transverse chain-link converter 56 to produce a DC voltage to reduce the voltage drop across the capacitive element 74, i.e. the transverse capacitor 76, within the same transverse branch, e.g. within the same first transverse branch 142 in the embodiment shown. In this manner the AC voltage appearing across the first and second AC connection terminals 42, 46 of each converter limb $12^1$, $12^2$, $12^3$ is a result of the AC voltage component of the stepped variable voltage produced by the corresponding longitudinal chain-link converter 26 and the AC voltage drop across the corresponding transverse capacitor 76.

In other embodiments of the invention based on the second voltage source converter 70, the control unit 150 may instead be programmed to control each transverse chain-link converter 56 to produce a stepped variable voltage $V^1_{armT}$, $V^2_{armT}$, $V^3_{armT}$ which augments the AC voltage component of the stepped variable voltage $V^1_{arm}$, $V^2_{arm}$, $V^3_{arm}$ produced by the longitudinal chain-link converter 26 in the same converter limb $12^1$, $12^2$, $12^3$, as shown by way of example in Figure 9(b).

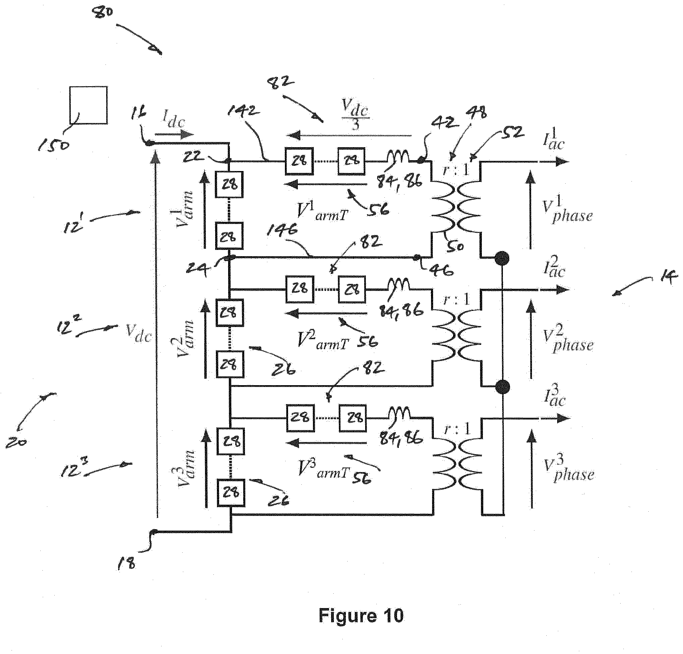

Figure 10 shows a voltage source converter 80 according to a third embodiment of the invention.

The third voltage source converter 80 is similar to the first voltage source converter 10 and again like features share the same reference numerals.

The third voltage source converter 80 differs from the first voltage source converter 10 in that it includes in the first transverse branch 142 of each converter limb $12^1$, $12^2$, $12^3$ a third transverse circuit 82 which includes only a transverse chain-link converter 56 connected in series with an inductive element 84 in the form of a transverse inductor 86.

In other embodiments (not shown) of the third voltage source converter the second transverse branch may instead include the third transverse circuit, or both the first and second transverse branches may have therein respective third transverse circuits.

In steady state conditions, i.e. during normal operation, the third voltage source converter 80 operates in essentially the same manner as the first voltage source converter 10, i.e. each corresponding transverse chain-link converter 56 blocks the DC offset, i.e.the DC voltage component $V^1_{arm}$, $V^2_{arm}$, $V^3_{arm}$ of the stepped variable voltage $V^1_{arm}$, $V^2_{arm}$, $V^3_{arm}$ produced by the associated longitudinal chain-link converter 26, by producing a stepped variable voltage $V^1_{armT}$, $V^2_{armT}$, $V^3_{armT}$ according to:

$$V^i_{armT} = \frac{V_{dc}}{3}$$

Additionally, in faulted conditions, e.g. in the event of a depressed voltage $V^1_{phase}$, $V^2_{phase}$, $V^3_{phase}$ in a single phase of the associated AC network 14, differing voltages $V^1_{phase}$, $V^2_{phase}$, $V^3_{phase}$ in multiple compromised phases of the associated AC network 14, or a depressed voltage in the associated DC network 20, the third voltage source converter 80 is again controlled to operate in essentially the same manner as the first voltage source converter 10.

However, the transverse inductor 86 in the third transverse circuit 82 within each converter limb $12^1$, $12^2$, $12^3$ reduces the level of voltage that the transverse chain-link converter 56 in each corresponding third transverse circuit 82 must produce, e.g. as compared to the level of voltage each such transverse chain-link converter 56 must produce in the first voltage source converter 10. As a consequence the number of individual half-bridge chain-link modules 40 that each said transverse chain-link converter 56 requires to deal with such faults is also reduced.

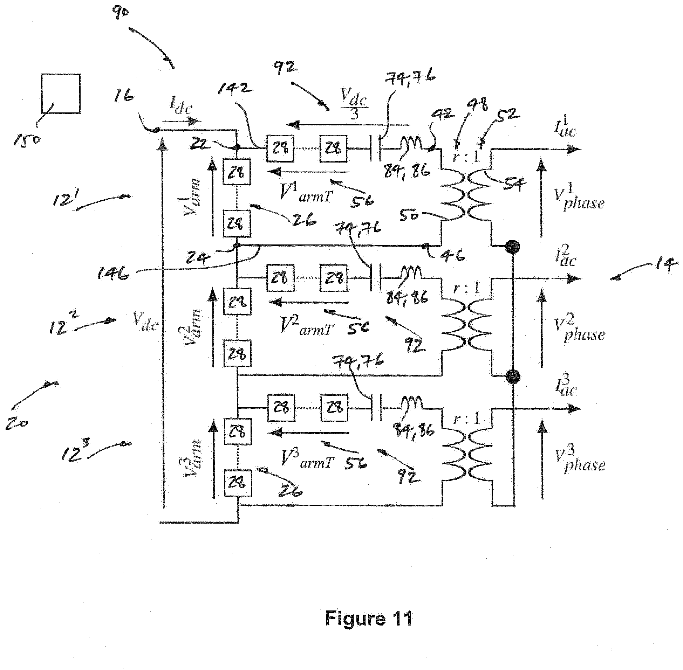

A voltage source converter 90 according to a fourth embodiment of the invention is shown in Figure 11.

The fourth voltage source converter 90 is similar to the second voltage source converter 70 and like features share the same reference numerals.

The fourth voltage source converter 90 does however include in the first transverse branch 142 of each converter limb $12^1$, $12^2$, $12^3$ a fourth transverse circuit 92 which as well as a transverse chain-link converter 56 and a capacitive element 74 in the form of a transverse capacitor 76 also includes an inductive element 84 in the form of a transverse inductor 86. Such an arrangement permits a still further reduction in the number of individual chain-link modules that each transverse chain-link converter 56 requires to deal with the various faults discussed herein.

In other embodiments (not shown) of the fourth voltage source converter the second transverse branch may instead include the fourth transverse circuit, or both the first and second transverse branches may have therein respective fourth transverse circuits.

It is conceivable that in some other arrangements, not forming a part of the invention, the transverse chain-link converter within such further transverse circuits could be omitted to leave just the capacitive element and the inductive element, i.e. just the transverse capacitor and transverse inductor.

In use the fourth voltage source converter 90 works in steady state conditions, i.e. during normal operation, in a similar manner to the second voltage source converter 70, i.e. with the DC offset voltage being blocked, i.e. removed, by the corresponding capacitive element 74, i.e. by the corresponding transverse capacitor 76, within each fourth transverse circuit 92.

Meanwhile, in such steady state conditions, each transverse chain-link converter 56 produces an AC voltage to cancel out an AC voltage drop across both the corresponding transverse capacitor 76 and the corresponding transverse inductor 86. This AC voltage is in quadrature with the currents $I^1_{ac}$, $I^2_{ac}$, $I^3_{ac}$ flowing in each phase of the AC network 14, and so balancing of the energy in the capacitors 32 of the various half-bridge chain-link modules 40 in each transverse chain-link converter 56 can be achieved.

The voltage produced by the transverse chain-link converter 56 within each fourth transverse circuit 92 is given by:

$$V^i_{armT} = \omega_{ac} \cdot L_{eq} \cdot \frac{1}{r} \hat{I}^i_{phase} \sin\left(\omega_{ac} \cdot t + \frac{\pi}{2} - \varphi - \frac{i-1}{3}\pi\right)$$

where,

$L_{eq}$ is an equivalent inductance emulated by the given transverse chain-link converter 56 according to:

$$L_{eq} = \frac{1}{\omega_{ac}^2 \cdot C_r} - L_r$$

with,

$C_r$ being the magnitude of the transverse capacitor 76; and
$L_r$ being the magnitude of the transverse inductor 86.

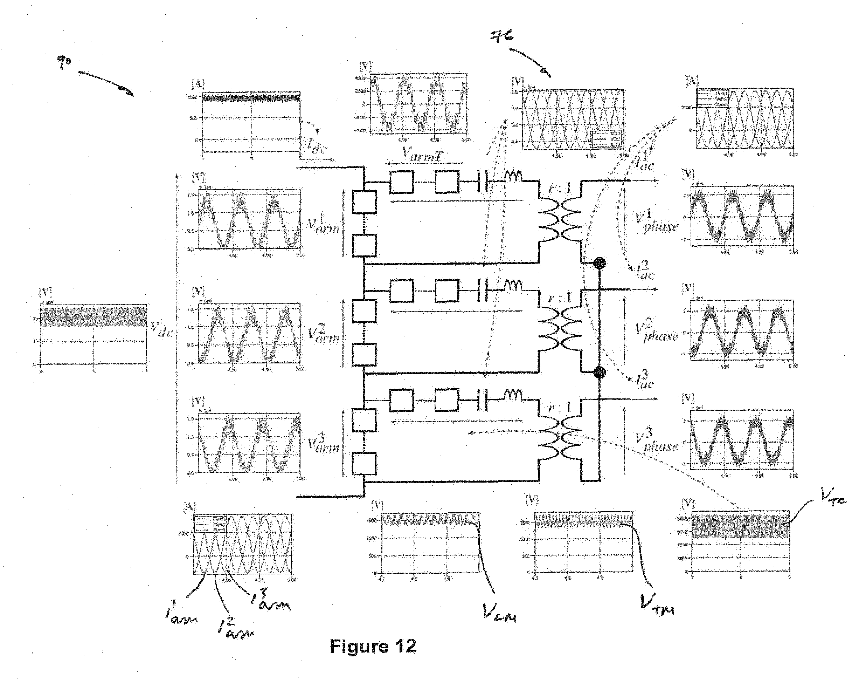

Figure 12 shows various voltage and current levels throughout the fourth voltage source converter 90 during its normal operation. In addition to those voltages and currents mentioned above, Figure 12 additionally illustrates the voltage $V_{LM}$ across each chain-link module 28 in the respective second longitudinal chain-link converters 26, the voltage $V_{TM}$ across each chain-link module 28 in the respective transverse chain-link converters 56, and the voltage $V_{TC}$ across the whole fourth transverse circuit 92 which averages to $V_{dc}/3$.

In faulted conditions, e.g. in the event of a depressed voltage $V^1_{phase}$, $V^2_{phase}$, $V^3_{phase}$ in a single phase of the associated AC network 14, differing voltages $V^1_{phase}$, $V^2_{phase}$, $V^3_{phase}$ in multiple compromised phases of the associated AC network 14, or a depressed voltage in the associated DC network 20, the fourth voltage source converter 90 is controlled to operate in essentially the same manner as the second voltage source converter 70, i.e. as described hereinabove.

## Claims

1. A voltage source converter (10; 70; 80; 90; 110), for use in high voltage direct current power transmission and reactive power compensation, comprising a plurality of converter limbs ($12^1$, $12^2$, $12^3$) connected in series between first and second DC terminals (16, 18) connectable in use to a DC network (20), each converter limb ($12^1$, $12^2$, $12^3$) including first and second series connection points (22, 24) between which extends a longitudinal chain-link converter (26) operable to provide a stepped variable voltage ($V^1_{arm}$, $V^2_{arm}$, $V^3_{arm}$), each first series connection point (22) being electrically connected with a corresponding first AC connection terminal (42) via a first transverse branch (142), each second series connection point (24) being electrically connected with a corresponding second AC connection terminal (46) via a second transverse branch (146), the first and second AC connection terminals (42, 46) together defining an AC connection (48) connectable in use to a respective phase of an AC network (14), and at least one transverse branch of the first and second transverse branches (142, 146) in each converter limb ($12^1$, $12^2$, $12^3$) including a transverse circuit (44; 72; 82; 92) having therein a transverse chain-link converter (56) operable to provide a stepped variable voltage ($V^1_{armT}$, $V^2_{armT}$, $V^3_{armT}$), and **characterized in that** the transverse circuit (82; 92) additionally includes an inductive or capacitive element (74, 84).

2. A voltage source converter (90) according to claim 1, wherein the transverse circuit (92) includes both the capacitive element (74) and the inductive element (84).

3. A voltage source converter (10; 70; 80; 90; 110) according to any preceding claim, further including a control unit (150) programmed in the event of a depressed voltage ($V^1_{phase}$, $V^2_{phase}$, $V^3_{phase}$) in a single phase of an associated AC network (14) to modify operation of the voltage source converter (10; 70; 80; 90; 110) to reduce the AC voltage presented across the first and second AC connection terminals (42, 46) of a compromised converter limb ($12^1$, $12^2$, $12^3$) corresponding to the said depressed single phase ($V^1_{phase}$, $V^2_{phase}$, $V^3_{phase}$).

4. A voltage source converter (10; 70; 80; 90; 110) according to Claim 3, wherein the control unit (150) is programmed to control the transverse chain-link converter (56) in the or each transverse branch (142, 146) of the corresponding compromised converter limb ($12^1$, $12^2$, $12^3$) to produce a stepped variable voltage ($V^1_{armT}$, $V^2_{armT}$, $V^3_{armT}$) which reduces an AC voltage component of the stepped variable voltage ($V^1_{arm}$, $V^2_{arm}$, $V^3_{arm}$) produced by the longitudinal chain-link converter (26) of the said corresponding compromised converter limb ($12^1$, $12^2$, $12^3$).

5. A voltage source converter (70; 90) according to Claim 4, , wherein the control unit (150) is further programmed to control the transverse chain-link converter (56) in the or each transverse branch (142, 146) of the or each other non-compromised converter limb ($12^1$, $12^2$, $12^3$) to produce a stepped variable voltage ($V^1_{armT}$, $V^2_{armT}$, $V^3_{armT}$) to cancel out the AC voltage drop ($V^1_{cT}$) across a corresponding capacitive element (74) within the or each said other non-compromised converter limb ($12^1$, $12^2$, $12^3$).

6. A voltage source converter (10; 70; 80; 90; 110) according to Claim 3, wherein the control unit (150) is programmed to control the longitudinal chain-link converter (26) in the corresponding compromised converter limb ($12^1$, $12^2$, $12^3$) to produce a stepped variable voltage ($V^1_{arm}$, $V^2_{arm}$, $V^3_{arm}$) with a reduced DC voltage component.

7. A voltage source converter (10; 70; 80; 90; 110) according to Claim 6, wherein the control unit (150) is further programmed to control the longitudinal chain-link converter (26) in the or each other non-compromised converter

limb ($12^1$, $12^2$, $12^3$) to produce a stepped variable voltage ($V^1_{arm}$, $V^2_{arm}$, $V^3_{arm}$) with an increased DC voltage component.

8. A voltage source converter (10; 70; 80; 90; 110) according to any preceding claim, further including a control unit (150) programmed in the event of differing voltages ($V^1_{phase}$, $V^2_{phase}$, $V^3_{phase}$) in multiple compromised phases of an associated AC network (14) to modify operation of the longitudinal chain-link converter (26) in each compromised converter limb ($12^1$, $12^2$, $12^3$) corresponding to a compromised phase to produce a stepped variable voltage ($V^1_{arm}$, $V^2_{arm}$, $V^3_{arm}$) with an altered DC voltage component commensurate with the differing voltage in the corresponding compromised phase.

9. A voltage source converter (110) according to Claim 8, further comprising a compensatory chain-link converter (126) operable to provide a stepped variable voltage, wherein one or both of the first and second DC terminals (16, 18) is connected to the compensatory chain-link converter.

10. A voltage source converter (110) according to Claim 9, wherein the control unit (150) is additionally programmed to control the or each compensatory chain-link converter (126) to produce a stepped variable voltage equal but opposite to a voltage ripple ($V_O$) that would otherwise appear in a DC voltage ($V_{dc}$) at the first and second DC terminals (16, 18) as a result of the differing stepped variable voltages ($V^1_{arm}$, $V^2_{arm}$, $V^3_{arm}$) produced by the longitudinal chain-link converters (26).

11. A voltage source converter (10; 70; 80; 90) according to Claim 8, wherein the control unit (150) is further programmed to control the longitudinal chain-link converters (26) to produce stepped variable voltages ($V^1_{arm}$, $V^2_{arm}$, $V^3_{arm}$) including a set of negating voltage components ($V_{aO'}$, $V_{bO'}$, $V_{cO'}$) which together are equal but opposite to a voltage ripple ($V_O$) that would otherwise appear in a DC voltage ($V_{dc}$) at the first and second DC terminals (16, 18) as a result of the differing stepped variable voltages ($V^1_{arm}$, $V^2_{arm}$, $V^3_{arm}$) that otherwise would be produced by the longitudinal chain-link converters (26).

12. A voltage source converter (10; 70; 80; 90) according to Claim 11, wherein the control unit (150) is still further programmed to control the transverse chain-link converter (56) in the or each transverse branch (142, 146) of each converter limb ($12^1$, $12^2$, $12^3$) to produce stepped variable voltages ($V^1_{armT}$, $V^2_{armT}$, $V^3_{armT}$) including a corresponding set of equal but opposite negating voltage components.

13. A voltage source converter (10; 70; 80; 90; 110) according to any preceding claim, further including a control unit (150) programmed in the event of a depressed voltage ($V_{dc}$) in an associated DC network (20) to control each longitudinal chain-link converter (26) to produce a stepped variable voltage ($V^1_{arm}$, $V^2_{arm}$, $V^3_{arm}$) with an equally reduced DC voltage component.

14. A voltage source converter (10; 80; 110) according to Claim 13,, wherein the control unit (150) is still further programmed to control the transverse chain-link converter (56) in the or each transverse branch (142, 146) of each converter limb ($12^1$, $12^2$, $12^3$) to produce one of:

    (i) a stepped variable voltage ($V^1_{armT}$, $V^2_{armT}$, $V^3_{armT}$) to augment or supplant the AC voltage component of the stepped variable voltage ($V^1_{arm}$, $V^2_{arm}$, $V^3_{arm}$) produced by the longitudinal chain-link converter (26) in the same converter limb ($12^1$, $12^2$, $12^3$); and
    (ii) a zero voltage thereacross.

15. A voltage source converter (70; 90) according to Claim 13, wherein the control unit (150) is still further programmed to control the transverse chain-link converter (56) in the or each transverse branch (142, 146) of each converter limb ($12^1$, $12^2$, $12^3$) to produce one of:

    (i) a DC voltage which reduces the voltage drop across a capacitive element (74) within the same transverse branch (142, 146); and
    (ii) a stepped variable voltage ($V^1_{armT}$, $V^2_{armT}$, $V^3_{armT}$) to augment the AC voltage component of the stepped variable voltage ($V^1_{arm}$, $V^2_{arm}$, $V^3_{arm}$) produced by the longitudinal chain-link converter (26) in the same converter limb ($12^1$, $12^2$, $12^3$).

**Patentansprüche**

1.  Spannungsquellenwandler (10; 70; 80; 90; 110) zur Verwendung in Hochspannungsgleichstromübertragung und Blindleistungskompensation, umfassend eine Vielzahl von Wandlerschenkeln ($12^1$, $12^2$, $12^3$), die in Reihe zwischen ersten und zweiten Gleichstromanschlüssen (16, 18) verbunden sind, die in Verwendung mit einem Gleichstromnetzwerk (20) verbunden werden können, wobei jeder Wandlerschenkel ($12^1$, $12^2$, $12^3$) erste und zweite Reihenverbindungspunkte (22, 24) beinhaltet, zwischen denen sich ein Längsverkettungswandler (26) erstreckt, der betriebsfähig ist, eine abgestufte variable Spannung ($V^1_{arm}$, $V^2_{arm}$, $V^3_{arm}$) bereitzustellen, wobei jeder erste Reihenverbindungspunkt (22) elektrisch mit einem entsprechenden ersten Wechselstromverbindungsanschluss (42) über einen ersten Querstromzweig (142) verbunden ist, jeder zweite Reihenverbindungspunkt (24) elektrisch mit einem entsprechenden zweiten Wechselstromverbindungsanschluss (46) über einen zweiten Querstromzweig (146) verbunden ist, die ersten und zweiten Wechselstromverbindungsanschlüsse (42, 46) gemeinsam eine Wechselstromverbindung (48) definieren, die in Verwendung mit einer jeweiligen Phase eines Wechselstromnetzwerks (14) verbunden werden kann, und zumindest ein Querstromzweig der ersten und zweiten Querstromzweige (142, 146) in jedem Wandlerschenkel ($12^1$, $12^2$, $12^3$) eine Querschaltung (44; 72; 82; 92) beinhaltet, die darin einen Querverkettungswandler (56) aufweist, der betriebsfähig ist, eine abgestufte variable Spannung ($V^1_{armT}$, $V^2_{armT}$, $V^3_{armT}$) bereitzustellen, und **dadurch gekennzeichnet, dass** die Querschaltung (82; 92) zusätzlich ein induktives oder kapazitives Element (74, 84) beinhaltet.

2.  Spannungsquellenwandler (90) nach Anspruch 1, wobei die Querschaltung (92) sowohl das kapazitive Element (74) als auch das induktive Element (84) beinhaltet.

3.  Spannungsquellenwandler (10; 70; 80; 90; 110) nach einem der vorstehenden Ansprüche, weiter beinhaltend eine Steuereinheit (150), die programmiert ist, im Fall einer geschwächten Spannung ($V^1_{phase}$, $V^2_{phase}$, $V^3_{phase}$) in einer einzelnen Phase eines zugehörigen Wechselstromnetzwerks (14), Betrieb des Spannungsquellenwandlers (10; 70; 80; 90; 110) zu modifizieren, um die Wechselspannung, die über die ersten und zweiten Wechselstromverbindungsanschlüsse (42, 46) eines beeinträchtigten Wandlerschenkels ($12^1$, $12^2$, $12^3$) vorliegt, entsprechend der geschwächten einzelnen Phase ($V^1_{phase}$, $V^2_{phase}$, $V^3_{phase}$) zu reduzieren.

4.  Spannungsquellenwandler (10; 70; 80; 90; 110) nach Anspruch 3, wobei die Steuereinheit (150) programmiert ist, den Querverkettungswandler (56) in dem oder jedem Querstromzweig (142, 146) des entsprechenden beeinträchtigten Wandlerschenkels ($12^1$, $12^2$, $12^3$) zu steuern, um eine abgestufte variable Spannung ($V^1_{armT}$, $V^2_{armT}$, $V^3_{armT}$) zu erzeugen, die eine Wechselspannungskomponente der abgestuften variablen Spannung ($V^1_{arm}$, $V^2_{arm}$, $V^3_{arm}$) reduziert, die von dem Längsverkettungswandler (26) des entsprechenden beeinträchtigten Wandlerschenkels ($12^1$, $12^2$, $12^3$) erzeugt wird.

5.  Spannungsquellenwandler (70; 90) nach Anspruch 4, wobei die Steuereinheit (150) weiter programmiert ist, den Querverkettungswandler (56) in dem oder jedem Querstromzweig (142, 146) des oder jedes anderen nicht beeinträchtigten Wandlerschenkels ($12^1$, $12^2$, $12^3$) zu steuern, um eine abgestufte variable Spannung ($V^1_{armT}$, $V^2_{armT}$, $V^3_{armT}$) zu erzeugen, um den Wechselspannungsabfall ($V^i_{cT}$) über ein entsprechendes kapazitives Element (74) innerhalb des oder jedes anderen nicht beeinträchtigten Wandlerschenkels ($12^1$, $12^2$, $12^3$) auszugleichen.

6.  Spannungsquellenwandler (10; 70; 80; 90; 110) nach Anspruch 3, wobei die Steuereinheit (150) programmiert ist, den Längsverkettungswandler (26) in dem entsprechenden beeinträchtigten Wandlerschenkel ($12^1$, $12^2$, $12^3$) zu steuern, um eine abgestufte variable Spannung ($V^1_{arm}$, $V^2_{arm}$, $V^3_{arm}$) mit einer reduzierten Gleichspannungskomponente zu erzeugen.

7.  Spannungsquellenwandler (10; 70; 80; 90; 110) nach Anspruch 6, wobei die Steuereinheit (150) weiter programmiert ist, den Längsverkettungswandler (26) in dem oder jedem anderen nicht beeinträchtigten Wandlerschenkel ($12^1$, $12^2$, $12^3$) zu steuern, um eine abgestufte variable Spannung ($V^1_{arm}$, $V^2_{arm}$, $V^3_{arm}$) mit einer erhöhten Gleichspannungskomponente zu erzeugen.

8.  Spannungsquellenwandler (10; 70; 80; 90; 110) nach einem der vorstehenden Ansprüche, weiter beinhaltend eine Steuereinheit (150), die im Fall abweichender Spannungen ($V^1_{phase}$, $V^2_{phase}$, $V^3_{phase}$) in mehreren beeinträchtigten Phasen eines zugehörigen Wechselstromnetzwerks (14) programmiert sind, Betrieb des Längsverkettungswandlers (26) in jedem beeinträchtigten Wandlerschenkel ($12^1$, $12^2$, $12^3$) entsprechend einer beeinträchtigten Phase zu modifizieren, um eine abgestufte variable Spannung ($V^1_{arm}$, $V^2_{arm}$, $V^3_{arm}$) mit einer geänderten Gleichspannungskomponente in einem angemessenen Verhältnis mit der abweichenden Spannung in der entsprechenden beeinträchtigten Phase zu erzeugen.

9. Spannungsquellenwandler (110) nach Anspruch 8, weiter umfassend einen Ausgleichsverkettungswandler (126), der betriebsfähig ist, eine abgestufte variable Spannung bereitzustellen, wobei einer oder sowohl der erste als auch zweite Gleichstromanschluss (16, 18) mit dem Ausgleichsverkettungswandler verbunden ist.

10. Spannungsquellenwandler (110) nach Anspruch 9, wobei die Steuereinheit (150) zusätzlich programmiert ist, den oder jeden Ausgleichsverkettungswandler (126) zu steuern, eine abgestufte variable Spannung zu erzeugen, gleich aber entgegen einer Spannungswelligkeit ($V_O$), die sonst in einer Gleichspannung ($V_{dc}$) bei den ersten und zweiten Gleichstromanschlüssen (16, 18) als ein Ergebnis der abweichenden abgestuften variablen Spannungen ($V^1_{arm}$, $V^2_{arm}$, $V^3_{arm}$) aufträte, die von den Längsverkettungswandlern (26) erzeugt werden.

11. Spannungsquellenwandler (10; 70; 80; 90) nach Anspruch 8, wobei die Steuereinheit (150) weiter programmiert ist, die Längsverkettungswandler (26) zu steuern, abgestufte variable Spannungen ($V^1_{arm}$, $V^2_{arm}$, $V^3_{arm}$) zu erzeugen, die einen Satz aufhebender Spannungskomponenten ($V_{aO'}$, $V_{bO'}$, $V_{cO'}$) beinhalten, die gemeinsam gleich aber entgegen einer Spannungswelligkeit ($V_O$) sind, die ansonsten in einer Gleichspannung ($V_{dc}$) bei den ersten und zweiten Gleichstromanschlüssen (16, 18) als ein Ergebnis der abweichenden abgestuften variablen Spannungen ($V^1_{arm}$, $V^2_{arm}$, $V^3_{arm}$) aufträte, die ansonsten durch die Längsverkettungswandler (26) erzeugt werden würden.

12. Spannungsquellenwandler (10; 70; 80; 90) nach Anspruch 11, wobei die Steuereinheit (150) noch weiter programmiert ist, den Querverkettungswandler (56) in dem oder jedem Querstromzweig (142, 146) jedes Wandlerschenkels ($12^1$, $12^2$, $12^3$) zu steuern, um abgestufte variable Spannungen ($V^1_{armT}$, $V^2_{armT}$, $V^3_{armT}$) zu erzeugen, die einen entsprechenden Satz gleicher aber entgegengesetzter aufhebender Spannungskomponenten beinhalten.

13. Spannungsquellenwandler (10; 70; 80; 90; 110) nach einem der vorstehenden Ansprüche, weiter beinhaltend eine Steuereinheit (150), die im Fall einer abgeschwächten Spannung ($V_{dc}$) in einem zugehörigen Gleichstromnetzwerk (20) programmiert ist, jeden Längsverkettungswandler (26) zu steuern, eine abgestufte variable Spannung ($V^1_{arm}$, $V^2_{arm}$, $V^3_{arm}$) mit einer gleichermaßen reduzierten Gleichspannungskomponente zu erzeugen.

14. Spannungsquellenwandler (10; 80; 110) nach Anspruch 13, wobei die Steuereinheit (150) noch weiter programmiert ist, den Querverkettungswandler (56) in dem oder jedem Querstromzweig (142, 146) jedes Wandlerschenkels ($12^1$, $12^2$, $12^3$) zu steuern, eines zu erzeugen von:

   (i) einer abgestuften variablen Spannung ($V^1_{armT}$, $V^2_{armT}$, $V^3_{armT}$), um die Wechselspannungskomponente der abgestuften variablen Spannung ($V^1_{arm}$, $V^2_{arm}$, $V^3_{arm}$) zu verstärken oder zu ersetzen, die von dem Längsverkettungswandler (26) in dem selben Wandlerschenkel ($12^1$, $12^2$, $12^3$) erzeugt wird; und
   (ii) einer Nullspannung darüber.

15. Spannungsquellenwandler (70; 90) nach Anspruch 13, wobei die Steuereinheit (150) noch weiter programmiert ist, den Querverkettungswandler (56) in dem oder jedem Querstromzweig (142, 146) jedes Wandlerschenkels ($12^1$, $12^2$, $12^3$) zu steuern, eines zu erzeugen von:

   (i) einer Gleichspannung, die den Spannungsabfall über ein kapazitives Element (74) innerhalb desselben Querstromzweiges (142, 146) reduziert; und
   (ii) einer abgestufte variable Spannung ($V^1_{armT}$, $V^2_{armT}$, $V^3_{armT}$), um die Wechselspannungskomponente der abgestuften variablen Spannung ($V^1_{arm}$, $V^2_{arm}$, $V^3_{arm}$) zu verstärken, die von dem Längsverkettungswandler (26) in dem selben Wandlerschenkel ($12^1$, $12^2$, $12^3$) erzeugt wird.

## Revendications

1. Convertisseur de source de tension (10 ; 70 ; 80 ; 90 ; 110), destiné à être utilisé pour une transmission de courant électrique continu, CC, haute tension et une compensation de courant électrique réactionnelle, comprenant une pluralité de branches de convertisseur ($12^1$, $12^2$, $12^3$) connectées en série entre des première et seconde bornes CC (16, 18) pouvant être connectées en cours d'utilisation à un réseau CC (20), chaque branche de convertisseur ($12^1$, $12^2$, $12^3$) incluant des premier et second points de connexion en série (22, 24) entre lesquels s'étend un convertisseur de liaison en chaîne longitudinale (26) pouvant fonctionner pour fournir une tension variable échelonnée ($V^1_{arm}$, $V^2_{arm}$, $V^3_{arm}$), chaque premier point de connexion en série (22) étant connecté électriquement à une première borne de connexion à courant alternatif, CA, correspondante (42) via une première ramification transversale (142), chaque second point de connexion en série (24) étant connecté électriquement à une second borne de connexion CA correspondante (46) via une seconde ramification transversale (146), les première et seconde bornes de connexion CA (42, 46) définissant ensemble une connexion CA (48) pouvant être connectée en cours d'utilisation à une phase respective d'un réseau CA (14), et au moins une ramification transversale des première et seconde ramifications transversales (142, 146) dans chaque branche de convertisseur ($12^1$, $12^2$, $12^3$) incluant un circuit transversal (44 ; 72 ; 82 ; 92) ayant un convertisseur de liaison en chaîne transversale (56) pouvant fonctionner pour fournir une tension variable échelonnée ($V^1_{armT}$, $V^2_{armT}$, $V^3_{armT}$), et **caractérisé en ce que** le circuit transversal (82 ; 92) inclut en outre un élément inductif ou capacitif (74, 84).

2. Convertisseur de source de tension (90) selon la revendication 1, dans lequel le circuit transversal (92) inclut à la fois l'élément capacitif (74) et l'élément inductif (84).

3. Convertisseur de source de tension (10 ; 70 ; 80 ; 90 ; 110) selon l'une quelconque des revendications précédentes, incluant en outre une unité de commande (150) programmée dans le cas d'une tension abaissée ($V^1_{phase}$, $V^2_{phase}$, $V^3_{phase}$) dans une phase unique d'un réseau CA associé (14) pour modifier le fonctionnement du convertisseur de source de tension (10 ; 70 ; 80 ; 90 ; 110) afin de réduire la tension CA présentée à travers les première et seconde bornes de connexion CA (42, 46) d'une branche de convertisseur compromise($12^1$, $12^2$, $12^3$) correspondant à ladite phase unique abaissée ($V^1_{phase}$, $V^2_{phase}$, $V^3_{phase}$).

4. Convertisseur de source de tension (10 ; 70 ; 80 ; 90 ; 110) selon la revendication 3, dans lequel l'unité de commande (150) est programmée pour commander le convertisseur de liaison en chaîne transversale (56) dans la ou chaque ramification transversale (142, 146) de la branche de convertisseur compromise correspondante ($12^1$, $12^2$, $12^3$) pour produire une tension variable échelonnée ($V^1_{armT}$, $V^2_{armT}$, $V^3_{armT}$) qui réduit une composante de tension CA de la tension variable échelonnée ($V^1_{arm}$, $V^2_{arm}$, $V^3_{arm}$) produite par le convertisseur de liaison en chaîne longitudinale (26) de ladite branche de convertisseur compromise correspondante ($12^1$, $12^2$, $12^3$).

5. Convertisseur de source de tension (70 ; 90) selon la revendication 4, dans lequel l'unité de commande (150) est en outre programmée pour commander le convertisseur de liaison en chaîne transversale (56) dans la ou chaque ramification transversale (142, 146) de la ou chaque autre branche de convertisseur non compromise ($12^1$, $12^2$, $12^3$) pour produire une tension variable échelonnée ($V^1_{armT}$, $V^2_{armT}$, $V^3_{armT}$) afin d'annuler la chute de tension CA ($V^1_{cT}$) à travers un élément capacitif correspondant (74) dans la ou chaque dite autre branche de convertisseur non compromise($12^1$, $12^2$, $12^3$).

6. Convertisseur de source de tension (10 ; 70 ; 80 ; 90 ; 110) selon la revendication 3, dans lequel l'unité de commande (150) est programmée pour commander le convertisseur de liaison en chaîne longitudinale (26) dans la branche de convertisseur compromise correspondante ($12^1$, $12^2$, $12^3$) pour produire une tension variable échelonnée ($V^1_{arm}$, $V^2_{arm}$, $V^3_{arm}$) avec une composante de tension CC réduite.

7. Convertisseur de source de tension (10 ; 70 ; 80 ; 90 ; 110) selon la revendication 6, dans lequel l'unité de commande (150) est en outre programmée pour commander le convertisseur de liaison en chaîne longitudinale (26) dans la ou chaque autre branche de convertisseur compromise ($12^1$, $12^2$, $12^3$) pour produire une tension variable échelonnée ($V^1_{arm}$, $V^2_{arm}$, $V^3_{arm}$) avec une composante de tension CC accrue.

8. Convertisseur de source de tension (10 ; 70 ; 80 ; 90 ; 110) selon l'une quelconque des revendications précédentes, incluant en outre une unité de commande (150) programmée en cas de tensions différentes ($V^1_{phase}$, $V^2_{phase}$, $V^3_{phase}$) en plusieurs phases compromises un réseau CA associé (14) pour modifier le fonctionnement du convertisseur de liaison en chaîne longitudinale (26) dans chaque branche de convertisseur compromise ($12^1$, $12^2$, $12^3$) correspondant à une phase compromise pour produire une tension CA échelonnée ($V^1_{arm}$, $V^2_{arm}$, $V^3_{arm}$) avec une composante de tension CC modifiée proportionnelle à la tension différente dans la phase compromise correspondante.

9. Convertisseur de source de tension (110) selon la revendication 8, comprenant en outre un convertisseur de liaison en chaîne compensatoire (126) pouvant fonctionner pour fournir une tension variable échelonnée, dans lequel l'une des première et seconde bornes CC (16, 18), ou les deux, est connectée au convertisseur de liaison en chaîne compensatoire.

10. Convertisseur de source de tension (110) selon la revendication 9, dans lequel l'unité de commande (150) est en outre programmée pour commander le ou chaque convertisseur de liaison en chaîne compensatoire (126) afin de produire une tension variable échelonnée égale mais opposée à une ondulation de tension ($V_O$) qui apparaîtrait sinon dans une tension CC ($V_{dc}$) aux première et seconde bornes CC (16, 18) en raison des tensions variables échelonnées différentes ($V^1_{arm}$, $V^2_{arm}$, $V^3_{arm}$) produites par le convertisseur de liaison en chaîne longitudinale (26).

11. Convertisseur de source de tension (10 ; 70 ; 80 ; 90) selon la revendication 8, dans lequel l'unité de commande (150) est en outre programmée pour commander les convertisseurs de liaison en chaîne longitudinale (26) afin de produire des tensions variables échelonnées ($V^1_{arm}$, $V^2_{arm}$, $V^3_{arm}$) incluant un ensemble de composantes de tension de négation ($V_{aO'}$, $V_{bO'}$, $V_{cO'}$) qui sont ensemble égales mais opposées à une ondulation de tension ($V_O$) qui sinon apparaîtrait dans une tension CC ($V_{dc}$) au niveau des première et seconde bornes CC (16, 18) en résultat des tensions variables échelonnées différentes ($V^1_{arm}$, $V^2_{arm}$, $V^3_{arm}$) qui seraient sinon produites par les convertisseurs de liaison en chaîne longitudinale (26).

12. Convertisseur de source de tension (10 ; 70 ; 80 ; 90) selon la revendication 11, dans lequel l'unité de commande (150) est en outre programmée pour commander le convertisseur de liaison en chaîne transversale (56) dans la ou chaque ramification transversale (142, 146) de chaque branche de convertisseur ($12^1$, $12^2$, $12^3$) pour produire des tensions variables échelonnées ($V^1_{armT}$, $V^2_{armT}$, $V^3_{armT}$) comprenant un ensemble correspondant de composantes de tension de négation égales mais opposées.

13. Convertisseur de source de tension (10 ; 70 ; 80 ; 90 ; 110) selon l'une quelconque des revendications précédentes, comprenant en outre une unité de commande (150) programmée en cas de tension abaissé ($V_{ac}$) dans un réseau CC associé (20) pour commander chaque convertisseur de liaison en chaîne longitudinale (26) afin de produire une tension variable échelonnée ($V^1_{arm}$, $V^2_{arm}$, $V^3_{arm}$) avec une composante de tension CC réduite de manière égale.

14. Convertisseur de source de tension (10 ; 80 ; 110) selon la revendication 13, dans lequel l'unité de commande (150) est en outre encore programmée pour commander le convertisseur de liaison en chaîne transversale (56) dans la ou chaque ramification transversale (142, 146) de chaque branche de convertisseur ($12^1$, $12^2$, $12^3$) pour produire une parmi :

   (i) une tension variable échelonnée ($V^1_{armT}$, $V^2_{armT}$, $V^3_{armT}$) pour augmenter ou supplanter la composante de tension CC de la tension variable échelonnée ($V^1_{arm}$, $V^2_{arm}$, $V^3_{arm}$) produite par le convertisseur de liaison en chaîne longitudinale (26) dans la même branche de convertisseur ($12^1$, $12^2$, $12^3$); et
   (ii) une tension nulle à travers celle-ci.

15. Convertisseur de source de tension (70 ; 90) selon la revendication 13, dans lequel l'unité de commande (150) est en outre encore programmée pour commander le convertisseur de liaison en chaîne transversale (56) dans la ou chaque ramification transversale (142, 146) de chaque branche de convertisseur ($12^1$, $12^2$, $12^3$) pour produire une parmi :

   (i) une tension CC qui réduit la chute de tension à travers un élément capacitif (74) dans la même ramification transversale (142, 146) ; et
   (ii) une tension variable échelonnée ($V^1_{armT}$, $V^2_{armT}$, $V^3_{armT}$) pour augmenter la composante de tension CC de la tension variable échelonnée ($V^1_{arm}$, $V^2_{arm}$, $V^3_{arm}$) produite par le convertisseur de liaison en chaîne longitudinale (26) dans la même branche de convertisseur ($12^1$, $12^2$, $12^3$).

**Figure 1**

Figure 2(a)

Figure 2(b)

**Figure 3(a)**

**Figure 3(b)**

Figure 4(a)

Figure 4(b)

Figure 4(c)

Figure 5(a)

Figure 5(b)

**Figure 6**

Figure 7(a)

Figure 7(b)

$$V_{arm}^j = r \cdot V_{ac}^j$$

**Figure 7(c)**

**Figure 8**

Figure 9(a)

Figure 9(b)

**Figure 10**

**Figure 11**

**Figure 12**

EP 3 352 354 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3096446 A1
- EP 2858231 A1

- WO 2011141059 A1

**Non-patent literature cited in the description**

- The Series Bridge Converter (SBC): A hybrid modular multilevel converter for HVDC applications. **AMANK-WAH EMMANUEL et al.** 2016 18TH EUROPEAN CONFERENCE ON POWER ELECTRONICS AND APPLICATIONS (EPE'16 ECCE EUROPE). IEEE-PELS AND EPE ASSOCIATION, 05 September 2016, 1-9